# EUROPEAN PATENT APPLICATION

(11) **EP 1 672 514 A1**
(43) Date of publication of application: **21.06.2006**
(21) Application number: 04257853.4
(22) Date of filing: 16.12.2004
(51) Int. Cl.: G06F 13/42, H04L 5/20

(54) **Data communication system**

(71) Applicant: STMicroelectronics (Research & Development) Limited, Marlow, Buckinghamshire SL7 1YL (GB)
(72) Inventor: Baxter, Donald, Bannockblum Stirling FK7 8PZ (GB); Laffoley, Brian, Dalgety Bay Fife KY11 9LR (GB); Hurwitz, Jed, Colington Village Edinburg EH13 0JT (GB)
(74) Representative: Cooper, John

(57) **Abstract**

An data communication system is disclosed comprising a first control device; a second data device; a data link between the second data device and the first control device, comprising a first transmission link and a second transmission link; a data driver means enabling data transmission from the second data device to the first control device across the data link; a differential control means adapted to generate a voltage differential between the first transmission link and the second transmission link; and a detector means enabled to detect differences in voltage levels between the first transmission link and the second transmission link. The data communication system enables bi-directional communication between integrated circuit devices over a serial communication link avoiding the necessity for clock, chip enable and control connections on the data device and is particularly useful for communication between an image sensor and coprocessor.

## Description

The present invention relates to a system for data communication and particularly, but not exclusively, to a system for data communication between integrated circuit (IC) devices using differential common mode signalling.

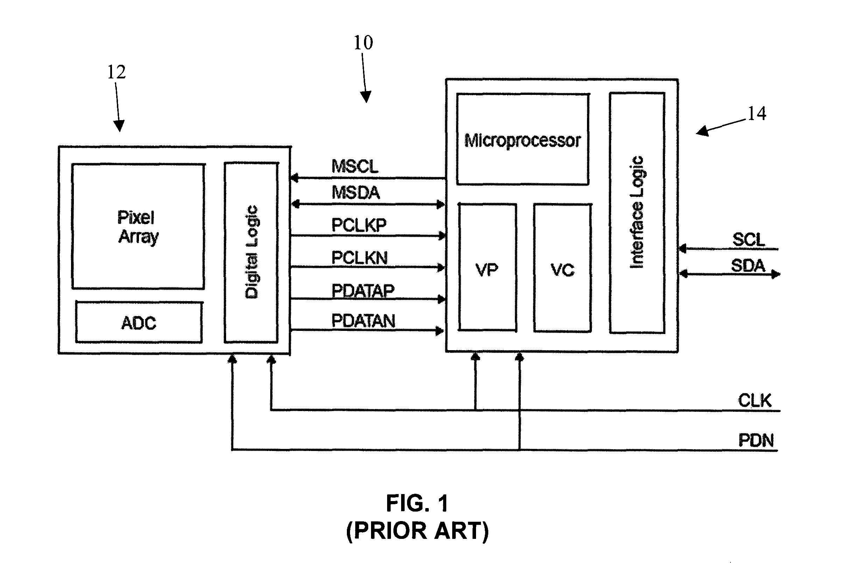

A typical prior art image sensor IC device requires at least eight electrical connectors or pins. The image sensor requires a coprocessor to form a complete imaging system. Referring to Fig. 1, a prior art image system 10 includes an image sensor 12 and a coprocessor 14. The system 10 has power down control line PDN and a system clock line CLK both of which are connected to both the image sensor 12 and the coprocessor 14.

The image sensor 12 and the coprocessor 14 communicate control commands over a private I²C (Inter-Integrated Circuit) bus having a I²C clock line MSCL and I²C data line MSDA, where the coprocessor 12 is the bus master and the image sensor 10 is a single slave.

Data, in the form of pixel values, from the image sensor 10 is communicated over serial differential data lines PDATAP and PDATAN in conjunction with serial clock qualification lines PCLKP and PCLKN. The clock lines PCLKP and PCLKN enable the coprocessor 14 to synchronise correctly with the data communicated on the data lines PDATAP and PDATAN.

Advances in technology have driven integrated circuits down in size dramatically. In some cases, the IC device size is limited, not by the IC itself, but by the space required to enable the number of connectors or pins to be attached to the IC.

Prior art solutions to reduce the number of pins have a significant protocol and/or transmission/reception implementation cost. For example, duplex links are available, where the transmitted signal has to be filtered out of the received signal before it can be used. Another example of prior art is a half duplex link, were the link is used one way for a time and then the other for some time. However, half duplex systems suffer when there is little down time of data travelling in one direction in which data can be transmitted the other way. Time, as well as other issues, cause this approach to be technically difficult.

According to the present invention there is provided a data communication system comprising:
a first control device;
a second data device;
a communication link between the second data device and the first control device, comprising a first transmission link and a second transmission link;
a data driver means enabling data transmission from the second data device to the first control device across the communication link;
a differential control means adapted to generate a voltage differential between the first transmission link and the second transmission link; and
a detector means enabled to detect differences in voltage levels between the first transmission link and the second transmission link.

The detector means is any suitably connected arrangement to differentiate voltage levels between the first transmission link and the second transmission link.

Preferably, the first control device receives an external clock signal and the differential control means varies the voltage differential between the first transmission link and the second transmission link such that the external clock signal is transmitted to the second data device as an internal clock signal.

Preferably, the differential control means is enabled to vary the duty cycle of the transmission of the internal clock signal to represent a data signal from the first control device to the second data device.

Preferably, the detector means comprises a clock detector means and a data detector means.

Preferably, the second data device further comprises a phase lock loop, the phase lock loop receiving the internal clock signal from the clock detector means.

Preferably, the phase lock loop locks to the positive edges of the internal clock signal.

Preferably, the first transmission link comprises a first data line and a second data line and the second transmission link comprises a first clock line and a second clock line, the first and second transmission links thereby forming a serial data link from the second data device to the first control device, the first transmission link thereby having a first common mode voltage and the second transmission link having a second common mode voltage.

Preferably, the second data device further comprises a filter, the filter filtering the internal clock signal and enabling the data signal to be extracted from the internal clock signal to produce a filtered data signal.

Preferably, the filter comprises an analogue filter, an over-sampler and a digital filter, the data signal first being passed to the analogue filter before being over-sampled by the over-sampler and finally digitally filtered by the digital filter to produce the filtered data signal.

Preferably, the second data device is enabled and/or disabled by setting the first and the second transmission links to ground or to high.

Preferably, a device enable detector detects that the first and the second transmission links are set to ground, or to high, and enables or disables the second data device.

According to a second aspect of the present invention there is provided an optical pointing device comprising a data communication system according to the first aspect of the invention.

Preferably, the optical pointing device is an optical mouse.

According to a third aspect of the present invention there is provided a mobile device comprising a data communication system according to the first aspect of the invention.

Preferably, the mobile device is a mobile cellular telephone.

Alternatively, the mobile device is a camera.

Embodiments of the present invention will now be described with reference to the accompanying drawings, in which;
Fig. 1 illustrates a prior art data communication system between devices;
Fig. 2 illustrates an embodiment of a data communication system according to the present invention;
Fig. 3 illustrates encoding of a data signal according to an embodiment of the present invention;
Fig. 4 illustrates filtering of a data signal according to an embodiment of the present invention; and
Fig. 5 illustrates traces of a data communication link, a clock communication link and a control communication link.

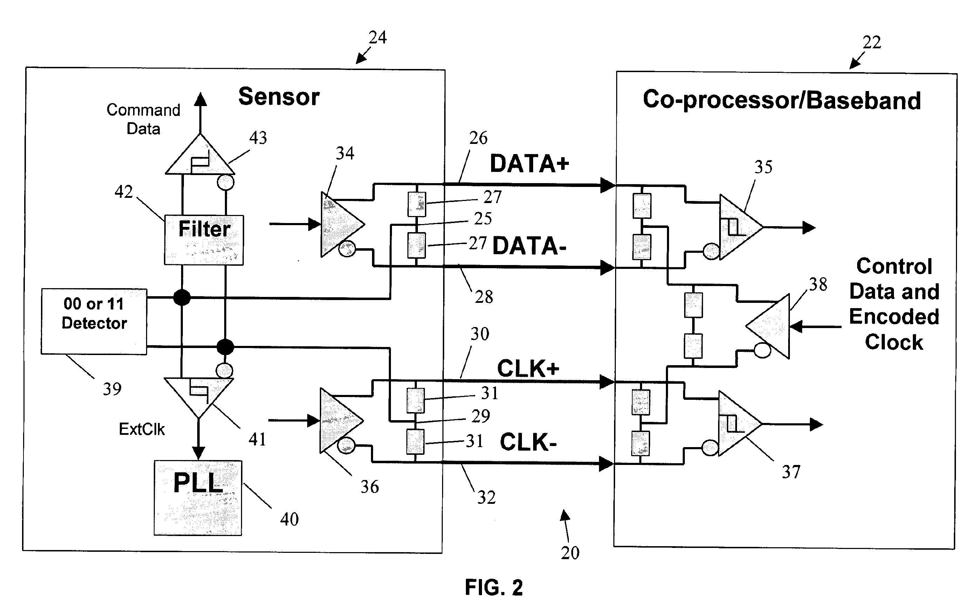

Referring to Fig. 2, a data communication system 20 is used between a first control device, or coprocessor, 22 and a second data device, or sensor, 24.

Serial communication between the sensor 24 and the coprocessor 22 comprises a first transmission link, which in this case is a data communication link having a positive data line 26 and a negative data line 28, and a second transmission link, which in this case is a clock communication link having a positive clock line 30 and a negative clock line 32.

The sensor 24 has a data link driver 34 and clock link driver 36 to enable serial data transfer from the sensor 24 to the coprocessor 22. The coprocessor 22 has a data link receiver 35 and clock link receiver 37 which enable the information from the data communication link and the clock communication link to be utilised by the coprocessor 22. In prior art systems the serial data transfer has been only one way from the sensor 24 to the coprocessor 22.

The data communication link and clock communication link use differential signalling to transmit data bits and clock pulses respectively. Typically, a differential signal has two equal but opposite signals about a centre potential. The centre potential is often referred to as the common mode level V_{cm}. Therefore, the data communication link has a data common mode level and the clock communication link has a clock common mode level.

The coprocessor 22 has a control data driver 38 to create a control communication link between the coprocessor 22 and the sensor 24. The control driver 38 is connected to both the data communication link and the clock communication link. Control data information is transmitted to the sensor 24 from the coprocessor by creating a differential signal between the data communication link and the clock communication link by varying the data common mode level and the clock common mode level. The control data having a control common mode level representing the centre potential of the control communication link. The data common mode level is detected at a common mode node 25 and the clock common mode level is detected at a common mode node 29. The node 25 is connected to the positive data line 26 and negative data line 28 by way of resistance elements 27. The node 29 is connected to the positive clock line 30 and negative clock line 32 by way of resistance elements 31. Typically, the resistance elements 27, 31 are of equal resistance.

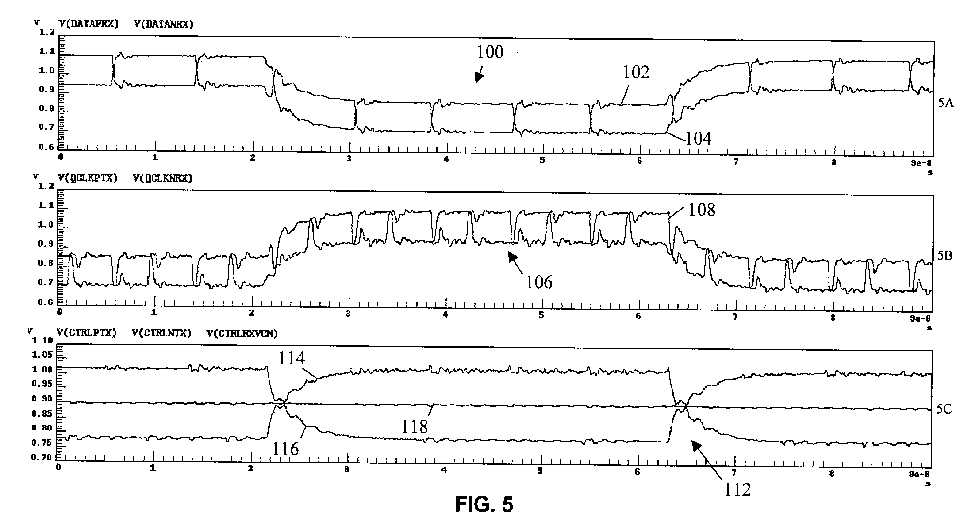

Referring to Fig. 5a, a data communication signal 100 is shown having a positive data signal 102 and negative data signal 104.

Negative is only used in the sense that a signal is equal but opposite around a common mode level.

The data communication signal 100 has a data common mode level at point 0 of approximately 1V and therefore the positive data signal 102 and negative data signal 104 will alternate above and below the data common mode level by the same amount. The exact timing of the positive data signal 102 and negative data signal 104 changing depending on the signal that is being transmitted.

Fig. 5b shows a clock communication signal 106 having a positive clock signal 108 and negative clock signal 110. The clock communication signal 106, at point 0, has a clock common mode level of approximately 0.78V and therefore the positive clock signal 108 and negative clock signal 110 will alternate above and below the clock common mode level by the same amount.

Fig. 5c shows a control communication link 112 having a positive control signal 114 and a negative control signal 116. The positive control signal 114 is actually the clock common mode level and negative control signal 116 is actually the data common mode level. The control communication link 112 effectively has a control common mode level 118 about which the data common mode level and the clock common mode level alternate.

The control data includes an encoded control clock signal as well as control commands for the sensor 24 as described below.

The control commands can comprise any control information that is required to operate the sensor 24 such as, for example, in the case of an image sensor, a capture image command.

It is also possible to include device enable and/or power down commands which are functions that are often assigned a separate pin on an IC device. In a preferred embodiment, the device, in this case the sensor 22, is enabled and/or disabled by setting both the data common mode level and clock common mode level equal to ground. A device enable detector 39 receives the control data and detects device enable and/or power down commands.

The control clock signal is received by a control clock signal receiver 41 from the control data and passed to a Phase Lock Loop (PLL) 40. The PLL 40 enables the sensor 24 to provide a sensor clock signal which is of greater frequency than the control clock signal for transmission of sensor data across the serial communication link.

In this embodiment, by way of example only, the data communication system operates three separate clock frequencies for transfer of data. The external clock signal operates at 10MHz, the control clock signal at 1MHz and the sensor clock signal, for transfer of data from the sensor, at 100MHz.

The sensor 24 also includes a filter 42, discussed in more detail below, for filtering the control data before passing the control data to a control data receiver 43, which then provides a suitable control signal.

In this embodiment, the control clock receiver 41 and the control data receiver 43 are first and second detector means enabled to detect differences in voltage levels between the first transmission link and the second transmission link.

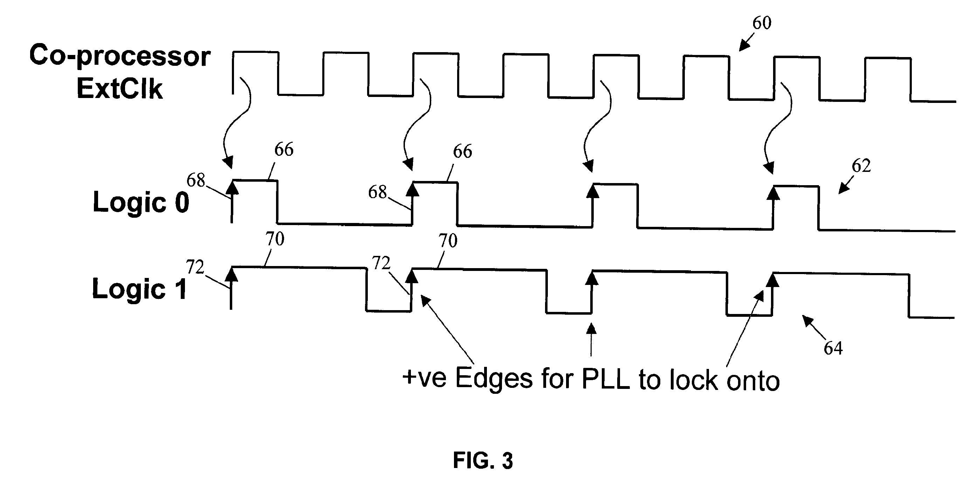

Referring now to Fig. 3, an external clock signal 60, a control logic "0" signal 62 and a control logic "1" signal 64 are shown. A control clock signal is transmitted across the control communication link by providing a control clock pulse 66, 70. The control clock signal is detected by the positive edge 68, 72 of the control clock pulse 66, 70. In this example, control data is transmitted over the control communication link at half the frequency of the external clock signal 60. To represent a logic "0" a short control clock pulse 66 is transmitted, equivalent to a single clock pulse of the external clock. To represent a logic "1" the duty cycle of the control clock pulse is altered to produce a long control clock pulse 70.

By transmitting the control data in this manner a control clock signal can be sent encoded within the control data.

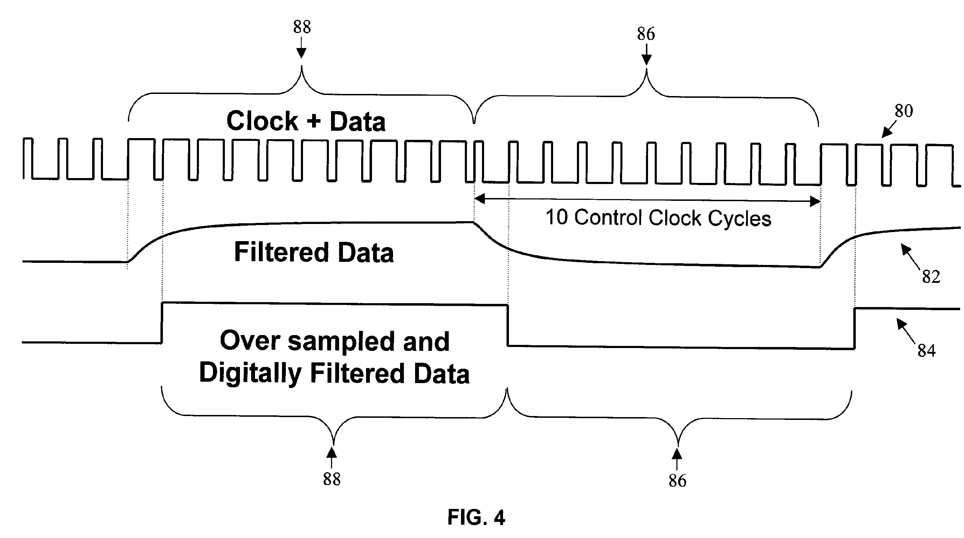

Referring now to Fig. 4, a control data signal 80, a filtered control data signal 82 and a digital control data signal 84 is shown. In this example, a logic "0" 86 or a logic "1" 88 is represented by ten control clock pulses in the control data signal 80. Therefore, if the external clock signal is 10MHz, the control clock signal will be 1MHz. The filter 42 has a number of filtering operations to produce the digital control data signal 84. Firstly, the control data signal 80 is low-pass filtered to produce the filtered control data signal 82. Secondly, the filtered control data signal 82 is over-sampled and digitally filtered to produce the digital control data signal 84.

It should be appreciated that, although the system has been described in relation to a differential data link and a differential clock link, any two differential links, regardless of the information they carry, would be appropriate to enable the invention.

The present invention avoids the use of at least four pins on a typical prior art sensor whilst enabling bi-directional communication. These include two pins usually used as a private I²C bus for control commands from the coprocessor, a pin for the external clock and a pin for chip enable. Furthermore, the present invention is simple to implement and reduces cost as the amount of silicon area required is reduced.

Improvements and modifications may be incorporated without departing from the scope of the present invention.

## Claims

1. A data communication system comprising:
a first control device (22);
a second data device (24);
a communication link between the second data device and the first control device, comprising a first transmission link and a second transmission link;
a data driver means (34, 36) enabling data transmission from the second data device to the first control device across the communication link;
a differential control means (38) adapted to generate a voltage differential between the first transmission link and the second transmission link; and
a detector means (41, 43) enabled to detect differences in voltage levels between the first transmission link and the second transmission link.

2. A system as claimed in claim 1, wherein the first control device receives an external clock signal and the differential control means (38) varies the voltage differential between the first transmission link and the second transmission link such that the external clock signal is transmitted to the second data device (24) as an internal clock signal.

3. A system as claimed in claim 2, wherein the differential control means (38) is enabled to vary the duty cycle of the transmission of the internal clock signal to represent a data signal from the first control device (22) to the second data device (24).

4. A system as claimed in claim 3, wherein the detector means comprises a clock detector means (41) and a data detector means (43).

5. A system as claimed in claim 4, wherein the second data device (24) further comprises a phase lock loop (40), the phase lock loop (40) receiving the internal clock signal from the clock detector means (41).

6. A system as claimed in claim 5, wherein the phase lock loop (40) locks to the positive edges of the internal clock signal.

7. A system as claimed in claims 1 to 6, wherein the first transmission link comprises a first data line (26) and a second data line (28) and the second transmission link comprises a first clock line (30) and a second clock line (32), the first and second transmission links thereby forming a serial data link from the second data device (24) to the first control device (22), the first transmission link thereby having a first common mode voltage and the second transmission link having a second common mode voltage.

8. A system as claimed in claims 3 to 7, wherein the second data device (24) further comprises a filter (42), the filter (42) filtering the internal clock signal and enabling the data signal to be extracted from the internal clock signal to produce a filtered data signal.

9. A system as claimed in claim 8, wherein the filter (40) comprises an analogue filter, an over-sampler and a digital filter, the data signal first being passed to the analogue filter before being over-sampled by the over-sampler and finally digitally filtered by the digital filter to produce the filtered data signal.

10. A system as claimed in claims 1 to 9, wherein the second data device (24) is enabled and/or disabled by setting the first and the second transmission links to ground or to high.

11. A system as claimed in claim 10, wherein a device enable detector (39) detects that the first and the second transmission links are set to ground, or to high, and enables or disables the second data device (24).

12. An optical pointing device comprising a data communication system as claimed in claims 1 to 10.

13. An optical pointing device as claimed in claim 12, wherein the optical pointing device is an optical mouse.

14. A mobile device comprising a data communication system as claimed in claims 1 to 10.

15. A mobile device as claimed in claim 14, wherein the mobile device is a mobile cellular telephone.

16. A mobile device as claimed in claim 14, wherein the mobile device is a camera.
